# EUROPÄISCHE PATENTSCHRIFT

(11) **EP 1 022 087 B1**
(45) Veröffentlichungstag und Bekanntmachung des Hinweises auf die Patenterteilung: **26.12.2007**
(21) Anmeldenummer: 00100822.6
(22) Anmeldetag: 17.01.2000
(51) Int. Cl.: B23K 26/12, B23K 35/38, B23K 26/14

(54) **Laserschweissen mit Prozessgas**
Laser welding with process gas
Soudage au laser avec gaz de traitement

(30) Priorität: 19.01.1999 DE 19901900
(43) Veröffentlichungstag der Anmeldung: 26.07.2000
(73) Patentinhaber: Linde Aktiengesellschaft, 80807 München (DE)
(72) Erfinder: Herrmann, Johann, 85716 Unterschleissheim (DE)
(74) Vertreter: Obermüller, Bernhard

(56) Entgegenhaltungen:
- EP-A- 0 464 392
- EP-A- 0 484 533
- EP-A- 0 579 205
- DE-A- 19 730 311
- US-A- 3 939 323
- US-A- 4 866 246
- PATENT ABSTRACTS OF JAPAN vol. 007, no. 193 (M-238), 24. August 1983 (1983-08-24) & JP 58 093592 A (MITSUBISHI JUKOGYO KK), 3. Juni 1983 (1983-06-03)
- "TECHNISCHE GASE ZUM LASERSCHNEIDEN" LASER PRAXIS, CARL HANSER VERLAG, MUENCHEN, DE, Nr. 1, 1. Juni 1989 (1989-06-01), Seite L38 XP000141815 ISSN: 0937-7069
- PATENT ABSTRACTS OF JAPAN vol. 1996, no. 10, 31. Oktober 1996 (1996-10-31) & JP 08 141763 A (KAWASAKI STEEL CORP), 4. Juni 1996 (1996-06-04)

## Beschreibung

Die Erfindung betrifft die Verwendung eines Prozeßgases zum Laserschweißen mit einem auf ein zu schweißendes Werkstück fokussierten Laserstrahl.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase eingesetzt, um diese Materialberarbeitungsprozesse effektiver, schneller und/oder mit verbesserter Qualität durchführen zu können.

Beim Laserschweißen erfüllen Prozeßgase verschiedene Aufgaben. Die Kontrolle und Reduzierung des Plasmas ist bei hohen Laserleistungen zwingend. Dies ist beispielsweise aus der Veröffentlichung "Laser im Nebel", Dr. W. Danzer und Klaus Behler, Zeitschrift LASER, Ausgabe 1/87, Seiten 32 bis 36, bekannt. Andere Aufgaben wie der Schutz vor Oxidation, eine metallurgische Optimierung und/oder eine Maximierung der Geschwindigkeit und der Qualität (Spritzer, Poren, Nahtqualität) werden bislang vernachlässigt.

Beim Laserschweißen ist es bekannt, inerte Schutzgase wie Helium oder Argon einzusetzen. Auch Stickstoff wird teilweise verwendet. Vereinzelt werden auch Beimengungen von Kohlendioxid, Sauerstoff oder Wasserstoff zu Argon oder Stickstoff gemischt.

So beinhaltet die US 3939323 eine Gasmischung aus Helium und Kohlendioxid mit bis zu 10 Vol.-% Kohlendioxid zum Laserschweißen und die JP 08141763 verschiedene Zwei-Komponenten-Mischungen, wobei unter anderem Mischungen aus Argon und Kohlendioxid oder aus Helium und Kohlendioxid mit einem Kohlendioxidanteil von 5 bis 50 % genannt werden. Die JP 58093592 beinhaltet ebenfalls mehrere Zwei-Komponenten-Mischungen zum Laserschweißen, wobei hier Mischungen mit 4 bis 50 % Kohlendioxid und Argon oder Helium angegeben werden. Die EP-A- 0464392 offenbart eine Verwendung einer Gasmischung aus Argon und/oder Helium oder Gemischen dieser Gase mit Kohlendioxid zur Bearbeitung eines Werkstückes mittels Laserstrahls, wobei für die Regelung des Plasmas ein Kaltgasgemisch eingesetzt wird.

Der Erfindung lag daher die Aufgabe zugrunde, die Verwendung eines Prozeßgases aufzuzeigen, welche ein verbessertes Laserschweißen ermöglicht. Insbesondere sollten mit Hilfe des Prozeßgases auch neben der Kontrolle und Reduzierung des Plasmas ein Schutz vor Oxidation, eine metallurgische Optimierung und/oder eine Maximierung der Geschwindigkeit und der Qualität erreicht werden.

Diese Aufgabe wird erfindungsgemäß durch die Verwendung eines Prozessgases gemäß Anspruch 1 gelöst.

Wesentlich ist für die Erfindung, daß das Prozeßgas neben einem Inertgasanteil auch einen Aktivgasanteil aufweist.

Es hat sich in Versuchen gezeigt, daß sogar bereits ein relativ niedriger Anteil an Helium in der Größenordnung von etwa 25 Vol.-% (z.B. ± 10 %) in der Regel für eine wirksame Plasmakontrolle ausreicht. Der genaue Prozentsatz für den Heliumanteil ist von verschiedenen Faktoren wie beispielsweise der Laserleistung, der Energiedichte, der Materialart, der Menge an verdampftem Material, der Schutzgasmenge, der Art der Gaszufuhr zum Schweißprozeß etc. abhängig. Die Anpassung der Gaszusammensetzung vor dem Hintergrund dieser Einflußfaktoren stellt für den Fachmann keinerlei Schwierigkeit dar.

Versuche an verzinkten Blechen brachten sehr gute Ergebnisse mit einem Anteil von 10 bis 25 Vol.-% Kohlendioxid (z.B. 15 Vol.-% CO₂). Der Kohlendioxidanteil führte zu wesentlich konstanteren Schweißergebnissen. Der Schweißprozeß war wesentlich sicherer und gegen Verunreinigungen des Nahtbereichs unempfindlicher. Die Geschwindigkeit konnte in einem Fall von 6 m/min auf 7 m/min gesteigert werden.

Helium dient dabei der Plasmaunterdrückung bzw. -kontrolle. Kohlendioxid unterstützt den Schmelzfluß. Argon erhöht die Abdeckung der Schweißzone. Argon erfüllt auch zumindest teilweise die Aufgabe des Heliums und trägt daher als preisgünstiger Ersatz des Inertgases Helium zur Wirtschaftlichkeit des Laserschweißens bei.

Die Erfindung kann im Zusammenhang mit allen Arten von Lasern zur Anwendung kommen. Vor allem eignet sie sich für den Einsatz bei der Laserbearbeitung mit Nd-YAG-Laser, Dioden-Laser und CO₂-Laser.

Mit dem erfindungsgemäßen Prozeßgas können insbesondere mit Vorteil niedriglegierte Stähle und verzinkte Stähle geschweißt werden.

## Patentansprüche

1. Verwendung eines Prozeßgases zum Laserschweißen mit einem auf ein zu schweißendes Werkstück fokussierten Laserstrahl, wobei das Prozeßgas aus 5 bis 50 Vol.-% Helium, 10 bis 25 Vol.-% Kohlendioxid und Argon im verbleibenden Volumenrest besteht.

2. Verwendung eines Prozessgases nach Anspruch 1, **dadurch gekennzeichnet, dass** das Prozessgas als inertgashaltiger Prozeßgasstrom gegen die Werkstückoberfläche geleitet wird.

## Claims

1. Use of a process gas for laser welding with a laser beam focused onto a workpiece that is to be welded, wherein the process gas consists of 5 to 50% by volume helium, 10 to 25% by volume carbon dioxide, with argon forming the remainder of the volume.

2. Use of a process gas according to Claim 1, **characterized in that** the process gas is passed onto the workpiece surface as a process gas stream with an inert gas content.

## Revendications

1. Utilisation d'un gaz de traitement pour le soudage au laser avec un faisceau laser focalisé sur une pièce à souder, dans laquelle le gaz de traitement se compose de 5 à 50 % en volume d'hélium, de 10 à 25 % en volume de dioxyde de carbone, et d'argon pour la fraction en volume restante.

2. Utilisation d'un gaz de traitement selon la revendication 1, **caractérisée en ce que** le gaz de traitement est conduit sous forme de courant de gaz de traitement contenant un gaz inerte contre la surface de la pièce.
